# EUROPÄISCHE PATENTANMELDUNG

(11) **EP 4 663 355 A1**
(43) Veröffentlichungstag der Anmeldung: **17.12.2025**
(21) Anmeldenummer: 24181635.4
(22) Anmeldetag: 12.06.2024
(51) Int. Cl.: B25J 9/16, B25J 9/00, B25J 13/08, B25H 1/00, B25J 11/00

(54) **BAUROBOTER UND VERFAHREN ZUR STEUERUNG EINES BAUROBOTERS**

(71) Anmelder: Hilti Aktiengesellschaft, 9494 Schaan (LI)
(72) Erfinder: Kindle, Julien, 9498 Planken (LI); Schmid, Florian, 9470 Buchs SG (CH); Schmidt, Peer, 88131 Lindau (DE)
(74) Vertreter: Hilti Aktiengesellschaft Corporate Intellectual Property

(57) **Zusammenfassung**

Die Erfindung betrifft einen Bauroboter (10), umfassend ein Fahrwerk (14), eine auf dem Fahrwerk (14) angeordnete Basis (12), eine an der Basis (12) angeordnete Hubvorrichtung (16), einen an der Hubvorrichtung (16) angeordneten, mit einem Endeffektor (20) versehenen, vorzugsweise mehrachsigen, Roboterarm (18). Sie ist dadurch gekennzeichnet, dass der Bauroboter (10) einen ersten Lagesensor (24, 26) aufweist, der eingerichtet ist, Lagedaten der Hubvorrichtung (16) zu messen. Ferner betrifft die Erfindung ein Verfahren (1000) zur Steuerung eines solchen Bauroboters (10). Die Erfindung ermöglicht ein schnelles und präzises Erreichen von Arbeitspositionen mit dem Endeffektor (20).

## Beschreibung

Die Erfindung betrifft einen Bauroboter, umfassend ein Fahrwerk, eine auf dem Fahrwerk angeordnete Basis, eine an der Basis angeordnete Hubvorrichtung, einen an der Hubvorrichtung angeordneten, mit einem Endeffektor versehenen Roboterarm sowie ein Verfahren zur Steuerung eines Bauroboters.

Derartige Bauroboter können verwendet werden, um Bauarbeiter von belastenden oder schweren Bauarbeiten auf Hochbau-Baustellen oder Tiefbau-Baustellen, Stahlbauwerken oder dergleichen zu entlasten.

Ein Beispiel solcher Bauarbeiten sind Bohrarbeiten an Decken großer Gebäude. So ist es eine häufige Bauaufgabe, eine Vielzahl von Löchern, beispielsweise in regelmäßigen Abständen, in eine Decke eines Bürogebäudes oder eines sonstigen großen Gebäudes zu bohren. Gerade Arbeiten an Decken sind für Bauarbeiter sehr anstrengend, sodass die Bauarbeiter sehr schnell ermüden oder sogar von Schmerzen oder dergleichen rasch betroffen sein können.

Damit ein Bauroboter eine solche Bauarbeit ausführen kann, muss sein Endeffektor möglichst schnell und mit möglichst hoher Präzision zu einer jeweils gewünschten Position gebracht und an der gewünschten Position positioniert werden. Dann können mit einer Werkzeugmaschine, beispielsweise einer Bohrmaschine, die am Endeffektor montiert ist, an der gewünschten Position die gewünschten Bauarbeiten ausgeführt werden.

Jedoch ergibt sich aus der gewünschten hohen Geschwindigkeit und der gleichermaßen erforderlichen hohen Präzision der Positionierung ein Zielkonflikt.

Für Bauarbeiten darf der Positionierfehler üblicherweise höchstens 5 mm betragen.

Dazu wird bislang entweder versucht, den Endeffektor mithilfe beispielsweise einer externen Totalstation nachzuverfolgen und kontinuierlich dessen Position zu messen. Dazu kann beispielsweise am Endeffektor ein Prisma angebracht sein, das fortlaufend von der Totalstation angepeilt wird. Nachteilig bei dieser Methode ist, dass die Totalstation die laufenden Peilungen nur mit einer sehr geringen Geschwindigkeit durchführen kann. Dadurch kann der Bauroboter nur sehr langsam arbeiten.

Weiter besteht ein Nachteil darin, dass dieses Verfahren ununterbrochen eine Sichtverbindung zwischen der Totalstation und dem Prisma erfordert. Dies ist gerade auf Baustellen nicht immer gegeben. Somit können mit diesem Verfahren nicht alle gewünschten Positionen, die bei einer Baustelle denkbar sind, erreicht werden.

Ein Versuch, diesen Nachteilen zu begegnen, besteht darin, eine Position und / oder Ausrichtung des Bauroboters lediglich dann zu ermitteln, wenn der Bauroboter insgesamt verlagert worden ist, beispielsweise, wenn der Bauroboter von einem Ort zu einem anderen Ort gefahren ist. Ausgehend von diesem neuen Ort werden mehrere Referenzpositionen mit dem Endeffektor angefahren. Die tatsächliche Position des Endeffektors nach Erreichen der jeweiligen Referenzpositionen wird durch die Totalstation ausgemessen. Aus den Messdaten mehrerer Referenzpositionen wird dann auf die tatsächliche Position des Bauroboters, beispielsweise seiner Basis, sowie seiner Orientierung relativ zu einem Welt-Koordinatensystem oder zur Totalstation geschlossen. Für die Positionierung des Endeffektors an einer gewünschten Position werden Steuerbefehle für die Hubvorrichtung und / oder den Roboterarm anhand eines vorab kalibrierten Festkörpermodells, oder allgemein eines kinematischen Modells, ausgehend von der ermittelten Position und Ausrichtung des Bauroboters bzw. seiner Basis erstellt. Die Hubvorrichtung und / oder der Roboterarm werden dann mit diesen Steuerbefehlen gesteuert, um den Endeffektor an die so berechnete Position zu bewegen, die zumindest möglichst nahe an der gewünschten Position sein sollte. Ein solches Verfahren erfordert jedoch eine sehr präzise Kalibrierung des Festkörpermodells. Allgegenwärtige Fehler oder Ungenauigkeiten in der Mechanik führen zu erheblichen Positionierfehlern, sodass mit dieser Methode nicht immer die gewünschte Positioniergenauigkeit erreichbar ist. Insbesondere in Fällen, bei denen die Hubvorrichtung und / oder der Roboterarm ausgefahren werden müssen, können besonders große Positionierfehler entstehen.

Es kann dann sein, dass beispielsweise Bohrlöcher an falschen Positionen, insbesondere außerhalb erlaubter Toleranzen, gesetzt werden. Montageelemente, die eigentlich an diesen Bohrlöchern befestigt werden sollten, können unter Umständen dann nicht mehr montiert werden. Entweder ist dann eine geplante Konstruktion nicht mehr in der ursprünglich geplanten Weise realisierbar oder es werden zumindest erhebliche Nacharbeiten, beispielsweise Verfüllen der falsch gesetzten Bohrlöcher und Bohren neuer Bohrlöcher, erforderlich.

Aufgabe der vorliegenden Erfindung ist es daher, einen Bauroboter sowie ein Verfahren anzubieten, die es ermöglichen, mit hoher Geschwindigkeit und mit der erforderlichen Präzision eine gewünschte Position mit dem Endeffektor anzufahren.

Gelöst wird die Aufgabe zunächst durch einen **Bauroboter,** umfassend ein Fahrwerk, eine auf dem Fahrwerk angeordnete Basis, eine an der Basis angeordnete Hubvorrichtung, einen an der Hubvorrichtung angeordneten, mit einem Endeffektor versehenen, vorzugsweise mehrachsigen, Roboterarm, wobei der Bauroboter einen ersten Lagesensor aufweist, der eingerichtet ist, Lagedaten der Hubvorrichtung zu messen.

Der erste Lagesensor kann vorzugsweise an der Hubvorrichtung angeordnet sein. Beispielsweise kann er an einem freien Ende der Hubvorrichtung, insbesondere an einem oberen Ende, angeordnet sein. Er kann somit die Lagedaten der Hubvorrichtung direkt messen. Denkbar ist auch, dass der erste Lagesensor an einem möglichst starren Element, angeordnet ist. Hierdurch ist eine indirekte Messung der Lagedaten der Hubvorrichtung möglich.

Ein Lagesensor kann ein Sensor sein, der eingerichtet ist, eine Position und / oder eine Ausrichtung eines ihm zugeordneten Elements zu messen. Beispielsweise kann der Lagesensor einen oder mehrere Beschleunigungssensoren umfassen. Kennt man beispielsweise eine Ausgangsposition und eine Ausgangs-Ausrichtung des Beschleunigungssensors, kann durch Integration seiner Messwerte eine aktuelle Position und / oder eine aktuelle Ausrichtung relativ zur Ausgangsposition und Ausgangs-Ausrichtung berechnet werden. Ist ein Beschleunigungssensor eingerichtet, die Schwerkraftrichtung oder dergleichen zu messen, kann beispielsweise eine Schräglage relativ zur Schwerkraftrichtung durch den Lagesensor gemessen werden. Der Lagesensor kann beispielsweise eine Inertialmesseinheit (IMU) umfassen.

Die Lagedaten können sich auf eine Position eines Elements der Hubvorrichtung, auf eine Bewegung und / oder Beschleunigung des Elements der Hubvorrichtung, auf einen Neigungswinkel des Elements, beispielsweise relativ zur Schwerkraftrichtung, und / oder auf eine Ausrichtung des Elements beziehen.

Der vorgeschlagenen Lösung liegen mehrere Grundgedanken zugrunde. So ist einer der Grundgedanken beispielsweise, dass der Bauroboter durch das Fahrwerk, die Hubvorrichtung und den Roboterarm insgesamt eine sehr lange kinematische Kette bildet. Ein zugehöriges kinematisches Modell unterliegt schon dadurch prinzipiell sehr hohen Fehlerrisiken. Das kinematische Modell muss verhältnismäßig viele Freiheitsgrade, die sich unter anderem durch die Struktur der Hubvorrichtung und des Roboterarms ergeben, modellieren. Dies ist umso mehr der Fall, je mehr Freiheitsgrade die Hubvorrichtung und der Roboterarm jeweils für sich aufweisen.

Hier greift die vorgeschlagene Lösung ein, in dem zu modellieren Freiheitsgrade durch reale Messwerte des ersten Lagesensors ersetzt werden können. Alternativ oder ergänzend kann das kinematische Modell anhand der Lagedaten des ersten Lagesensors laufend, zumindest teilweise, kalibriert werden.

Weiter schlägt die vorgeschlagene Lösung vor, Lagedaten speziell der Hubvorrichtung zu erfassen. Dem liegt die Erkenntnis zugrunde, dass die Hubvorrichtung weniger Vibrationen durch beispielsweise eine am Endeffektor montierte Werkzeugmaschine unterliegt. Auch Einschwingprozesse des Roboterarms, wenn dieser bewegt wird, brauchen nicht oder zumindest nicht so lange abgewartet werden, bis gemessene Lagedaten verwendbar sind. Ferner hat sich gezeigt, dass Instabilitäten entlang des Bauroboters bis zur Hubvorrichtung, also insbesondere des Fahrwerks, der Basis sowie der Hubvorrichtung selbst, eine der größten Fehlerquellen für Positionierfehler des Endeffektors darstellen. Dies liegt unter anderem daran, dass die Hubvorrichtung relativ zum Roboterarm in der Regel wesentlich weiter ausfahrbar ist, um dem Bauroboter einen möglichst großen Arbeitsbereich und möglichst große Arbeitslasten zu ermöglichen. Aufgrund der Hebelwirkung eines langen Arms, also insbesondere der Hubvorrichtung, ergeben somit bereits kleine Fehlerwinkel erhebliche Fehlauslenkungen, beispielsweise am freien Ende der Hubvorrichtung.

Nicht zuletzt bringen Freiheitsgrade des Roboterarms mit sich, dass im kinematischen Modell Schattenparameter, also nicht unmittelbar gemessene und daher nicht unmittelbar bekannte Parameter, mitmodelliert werden müssen. Mit steigender Anzahl von Freiheitsgraden steigen auch deshalb Fehlerrisiken des kinematischen Modells an. Durch Reduktion der Anzahl der zu modellierenden Freiheitsgrade aufgrund der Verwendung des ersten Lagesensors kann somit auch dieser systematischen Fehlerquelle begegnet werden.

Insgesamt ermöglicht somit die vorgeschlagene Lösung, die Genauigkeit eines verbleibenden kinematischen Modells grundsätzlich zu verbessern, sodass sich hierdurch eine besonders hohe Positioniergenauigkeit ergeben kann. Dadurch, dass Einschwingvorgänge etc. nicht abgewartet werden brauchen und auch keine fortlaufenden Messungen einer Totalstation erforderlich sind, können gewünschte Positionen mit hoher Geschwindigkeit angefahren werden.

Eine weitere Verbesserung kann sich ergeben, wenn wenigstens ein zweiter Lagesensor am Bauroboter an einer Position angeordnet ist, an der sich bei regulärem Betrieb die Orientierung des Lagesensors während einer Positionierung des Endeffektors um höchstens 10° von einer Nulllage weg ändern kann. Dies ist beispielsweise entlang des Roboterarms, insbesondere wenn er mehrachsig, beispielsweise 6-achsig, ausgebildet ist, häufig nicht gegeben. Ist jedoch der zweite Lagesensor an einer solchen Position angeordnet, kann zumindest mit ausreichender Genauigkeit für die Modellierung des kinematischen Modells angenommen werden, dass die Lagedaten primär auf einer Änderung der Position und nicht nur einer zufälligen Änderung der Ausrichtung beruhen. Eine solche Position ist beispielsweise entlang der Hubvorrichtung gegeben, die bei einem regulären Betrieb sich beispielsweise lediglich in vertikaler Richtung bewegen sollte. Eine solche Position kann auch das Fahrwerk und / oder die Basis betreffen, die üblicherweise nicht oder zumindest nur in einem geringen Maße gegenüber der Horizontalen oder der Vertikalen gekippt werden.

Der erste Lagesensor kann an der Hubvorrichtung, insbesondere an einem oberen Ende der Hubvorrichtung, angeordnet sein. Der erste Lagesensor kann eingerichtet sein, Lagedaten der Hubvorrichtung direkt zu messen. Den ersten Lagesensor an einem oberen Ende der Hubvorrichtung anzuordnen, ermöglicht aufgrund von Hebelwirkungen besonders präzise, selbst kleinste Lageänderungen aufzuzeichnen.

Der zweite Lagesensor kann an der Basis und / oder am Fahrwerk angeordnet sein. Es hat sich gezeigt, dass Lageänderungen des Fahrwerks nur sehr ungenau modelliert werden können. Grundsätzlich gibt es beim Fahrwerk mindestens zwei Aspekte, wie es zu einer bestimmten, besonderen Lage und / oder einer Lageänderungen in eine besondere Lage kommen kann:
1. Das Fahrwerk steht auf einem nicht-horizontalen Untergrund.
2. Das Fahrwerk wird asymmetrisch belastet.

Diese beiden Aspekte können auf Basis einer einfachen Modellierung der zugehörigen Freiheitsgrade nicht oder nur sehr ungenau mithilfe des kinematischen Modells unterschieden werden. Sie können allerdings unterschiedliche Auswirkungen auf die Positioniergenauigkeit haben. Während der 1. Aspekt eher statischer Natur ist, kann der 2. Aspekt aufgrund von unerwünschtem Spiel, Verschleiß, Elastizitäten des Materials, beispielsweise von Gummi-haltigen Material wie beispielsweise bei Reifen oder Gummi-Ketten, oder dergleichen abhängig vom tatsächlichen Ausmaß der asymmetrischen Belastung einen dynamischen Einfluss auf den Positionierfehler haben.

Beide Aspekte können durch den zweiten Lagesensor erfasst werden, wenn dieser an der Basis und / oder am Fahrwerk angeordnet ist. Dazu können auch zeitliche Verläufe der Lagedaten des zweiten Lagesensors ausgewertet werden. Denkbar ist auch, die Lagedaten des zweiten Lagesensors mit den Lagedaten des ersten Lagesensors zusammenzuführen.

Um die Präzision der Steuerung noch weiter zu verbessern, kann bei Ausführungsformen der vorgeschlagenen Lösung der Bauroboter einen Temperatursensor zur Messung von Temperaturdaten aufweisen. Die Temperatursensoren können beispielsweise zur Kompensation von thermischer Drift der Lagesensoren verwendet werden.

Auf Baustellen, insbesondere im Rohbauzustand, sind Böden häufig uneben und / oder rutschig. Um einen sicheren Stand und eine sichere Fortbewegung des Bauroboters zu ermöglichen, kann sein Fahrwerk ein Kettenfahrwerk umfassen. Das Kettenfahrwerk kann Ketten aufweisen. Obwohl häufig ein Kettenfahrwerk zu großen Positionierfehlern führen kann, können im Zusammenhang mit den hier vorgeschlagenen Maßnahmen Vorteile eines Kettenfahrwerks genutzt und Auswirkungen von unerwünschtem Spiel, von Elastizitäten, von Verschleiß des Kettenfahrwerks etc. ausgeglichen oder sogar behoben werden.

Um eine besonders weite Reichweite des Bauroboters zu ermöglichen, kann die Hubvorrichtung wenigstens zwei teleskopierbare Linearelemente aufweisen.

An jedem Linearelement kann ein Lagesensor angeordnet sein. Dadurch können Biegungen, nicht-lineare Verformungen der Hubvorrichtung etc. sowie ihre tatsächliche Geometrie im Detail erfasst werden.

Um eine Ausgangsposition des Bauroboters inklusive seiner Ausrichtung im Verhältnis zu einem Welt-Koordinatensystem oder der Totalstation zu ermitteln, kann der Bauroboter eingerichtet sein, sich anhand von mehreren anzufahrenden Referenzpositionen unter Kontrolle eines, insbesondere externen, Positionsmessgerätes, beispielsweise der Totalstation, zu kalibrieren. Dann können Kalibrierungsdaten und die Lagedaten der Lagesensoren miteinander fusioniert werden. Die Kalibrierungsdaten können durch Anfahren mehrerer Referenzpunkte unter gleichzeitiger Kontrolle des Positionsmessgerätes ermittelt werden. Vorzugsweise ist das Positionsmessgerät als externes Positionsmessgerät ausgebildet. D. h., das Positionsmessgerät ist außerhalb des Bauroboters angeordnet bzw. aufgestellt. Dann kann das Positionsmessgerät beispielsweise an einem vorab gemessenen Kontrollpunkt aufgestellt sein, dessen Relation zum Welt-Koordinatensystem bekannt ist. So lässt sich einfacher ein Bezug zum Welt-Koordinatensystem herstellen. Auch brauchen in diesem Falle Bewegungen des Bauroboters, beispielsweise seines Fahrwerks oder der Basis, nicht gemessen und / oder kompensiert werden, um den Bezug zum Welt-Koordinatensystem herzustellen.

In den Rahmen der Erfindung fällt des Weiteren ein **Verfahren zur Steuerung** eines Bauroboters der vorangehend beschriebenen Art. Das Verfahren umfasst,
dass Lagedaten der Hubvorrichtung mithilfe des ersten Lagesensors gemessen werden. Die Lagedaten werden in einem kinematischen Modell berücksichtigt. Steuerungsdaten für die Hubvorrichtung und / oder den Roboterarm für eine Position des Endeffektors werden mithilfe des kinematischen Modells vorausberechnet. Die Hubvorrichtung und / oder der Roboterarm werden gemäß den Steuerungsdaten eingestellt.

Wie auch vorangehend bereits geschildert, ermöglicht die Einbindung der Lagedaten ein präziseres kinematisches Modell. Die Messung der Lagedaten kann wiederholt und schnell erfolgen. Erforderliche Wartezeiten können aufgrund der Erfassung der Lagedaten der Hubvorrichtung gering ausfallen. Die Position des Endeffektors lässt sich somit schnell und präzise einstellen.

Aufgrund der großen Bedeutung von Verformungen der Hubvorrichtung für den sich ergebenden Positionsfehler kann vorzugsweise das kinematische Modell wenigstens einen Biegewinkel der Hubvorrichtung berücksichtigen.

Die Nutzung der Lagedaten ermöglicht es, den Endeffektor präziser zu positionieren. Jedoch weisen übliche Lagesensoren, insbesondere wenn sie auf Basis von Beschleunigungssensoren funktionieren, eine Drift auf. Die Drift kann zu kumulierenden Positionsfehlern führen. Um dem entgegenzuwirken, kann das kinematische Modell einen Messfehler, insbesondere eine Drift, wenigstens eines Lagesensors berücksichtigen. Beispielsweise kann das ein eigener Modellierungsparameter sein.

Weiter kann eine bedeutende Fehlerquelle minimiert werden, wenn das kinematische Modell eine Lage des Fahrwerks des Bauroboters berücksichtigt. Die Lage des Fahrwerks kann innerhalb des Modells modelliert sein. Besonders bevorzugt kann die Lage des Fahrwerks auch direkt gemessen werden. Die gemessene Lage kann dann im kinematischen Modell berücksichtigt werden.

Denkbar ist auch, dass die Basis, die Hubvorrichtung und / oder der Roboterarm mithilfe des Positionsmessgerätes, beispielsweise einer extern angeordneten Totalstation, kalibriert werden. Zur Kalibrierung können mehrere Referenzpositionen mit dem Endeffektor angefahren werden. Sobald der Endeffektor eine der Referenzpositionen erreicht, kann seine tatsächliche Position mithilfe des Positionsmessgerätes, beispielsweise der Totalstation, gemessen werden. Hieraus können die Position und Ausrichtung des Bauroboters, insbesondere seiner Basis und / oder seiner Hubvorrichtung und / oder des Roboterarms, erfasst werden. Diese Kalibrierung kann beispielsweise jedes Mal ausgeführt werden, wenn die Basis verlagert wird. Eine Reduktion der Kalibrierungen auf geänderte Standorte des Bauroboters anstelle einer kontinuierlichen Messung der Lage des Endeffektors mithilfe des Positionsmessgerätes, kann die Gesamtdauer der Positionierung des Endeffektors verkürzen.

Denkbar wäre alternativ oder ergänzend auch, dass der Roboterarm so lange wie möglich mit dem Positionsmessgerät, insbesondere der Totalstation, verfolgt wird. Wenn eine Verfolgung nicht mehr möglich ist, beispielsweise, weil keine Sichtverbindung mehr zwischen dem Positionsmessgerät und dem Prisma oder allgemein dem Bauroboter besteht, kann zu einer Vorausberechnung gemäß dem vorangehend beschriebenen Verfahren gewechselt werden. Auch hierdurch lässt sich die effektive Positionsgenauigkeit steigern.

Um bei diesem alternativen Verfahren dennoch eine hohe Geschwindigkeit zu erreichen, kann anstelle einer kontinuierlichen Überwachung der Position des Endeffektors bzw. seines Prismas, diese diskontinuierlich gemessen werden. Beispielsweise kann vorgesehen sein, alle 50 cm oder jeden Meter, den der Endeffektor zurücklegt, eine Messung mit dem Positionsmessgerät durchzuführen, sodass die langsamen Messungen des Positionsmessgerätes nicht zu einer inakzeptablen Verlangsamung der Einstellung des Endeffektors insgesamt führen.

Der Endeffektor kann eine Wechselschnittstelle zur Aufnahme einer mobilen Werkzeugmaschine aufweisen. Die mobile Werkzeugmaschine kann zum Sägen, Schneiden, Bohren, Schleifen und / oder Messen eingerichtet sein. Sie kann beispielsweise ein Bohrhammer, einen Meißel und / oder eine normale Bohrmaschine, eine Sägemaschine, eine Schleifmaschine und / oder ein Messgerät wie beispielsweise einen Kreuzlinien-Laser umfassen.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

**Es zeigen:**
- Figur 1: einen Bauroboter in einer schematischen Darstellung,
- Figur 2: ein kinematisches Modell des Bauroboters gemäß Figur 1 und
- Figur 3: ein Verfahren zur Steuerung eines Bauroboters.

In der folgenden Beschreibung der Figuren sowie in der Zeichnung werden zur Erleichterung des Verständnisses die gleichen Bezugszeichen für sich entsprechende Elemente verwendet.

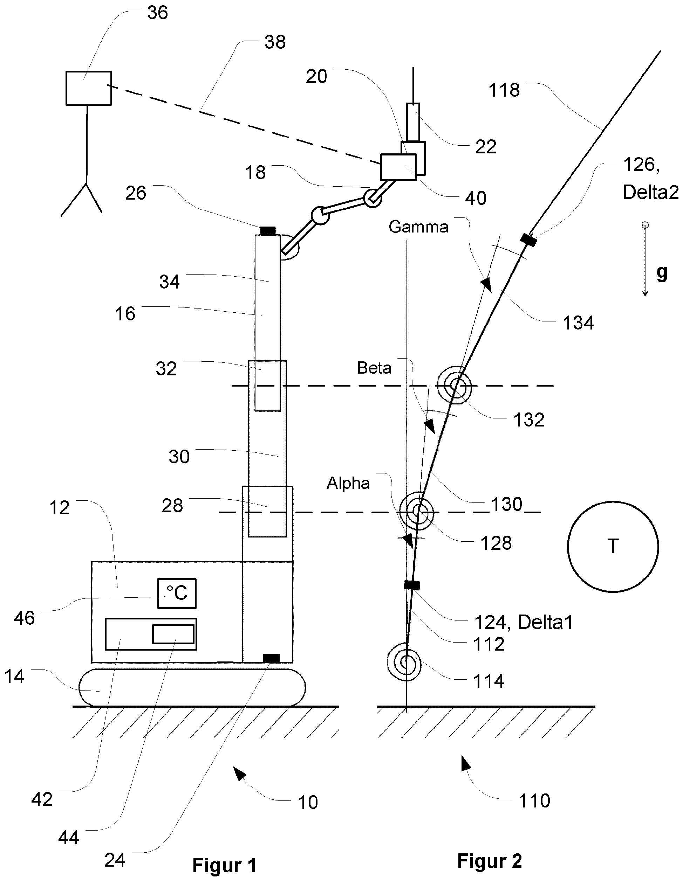

Figur 1 zeigt einen Bauroboter 10 in einer schematischen Darstellung. Der Bauroboter 10 weist eine Basis 12 auf.

Die Basis 12 ist auf einem Fahrwerk 14 angeordnet. Das Fahrwerk 14 ist ein Kettenfahrwerk.

An der Basis 12 ist eine Hubvorrichtung 16 angeordnet. Die Hubvorrichtung 16 ist im Wesentlichen vertikal ausgerichtet. Sie dient zur Vergrößerung eines Arbeitsraums des Bauroboters 10, insbesondere in vertikaler Richtung. Durch die Hubvorrichtung 16 kann der Bauroboter 10 Bauarbeiten an Decken ausführen, die sich in einer Höhe von beispielsweise bis zu 5 m befinden.

An einem freien Ende der Hubvorrichtung 16 ist ein Roboterarm 18 angeordnet. Der Roboterarm 18 ist mehrachsig, insbesondere wenigstens 6-achsig, ausgebildet. Dadurch kann sein an seinem freien Ende befindlicher Endeffektor 20 gemäß drei Translationsfreiheitsgraden verlagert und gemäß drei Rotationsfreiheitsgraden ausgerichtet werden. Der Bauroboter 10 ist somit in der Lage, Bauarbeiten an Böden, Wänden und / oder Decken auszuführen.

Am Endeffektor 20 ist eine Werkzeugmaschine 22 angeordnet. Im Ausführungsbeispiel gemäß Figur 1 ist die Werkzeugmaschine als Bohrhammermaschine ausgebildet.

Der Bauroboter 10 ist mit zwei Lagesensoren ausgestattet. Ein erster Lagesensor 26 befindet sich am freien Ende der Hubvorrichtung 16.Am Fuß der Hubvorrichtung 16 und somit an der Basis 12 ist ein zweiter Lagesensor 24 angeordnet.

Die Hubvorrichtung 16 ist mehrteilig aufgebaut. Mithilfe eines Gewindetriebs 28 kann ein erstes Linearelement 30 vertikal ausgefahren oder eingefahren werden. Auf dem ersten Linearelement 30 sitzt ein weiterer Gewindetrieb 32, der ein zweites Linearelement 34 bewegt. Durch die Linearelemente 30, 34 in Verbindung mit den Gewindetrieben 28, 32 ist die Hubvorrichtung 16 vertikal teleskopierbar. Die Gewindetriebe 28, 32 können dabei durch einen gemeinsamen, beispielsweise in der Basis 12 platzierten Motor, angetrieben werden.

In Figur 1 ist ferner ein externes Positionsmessgerät 36 zu erkennen. Mithilfe eines Laserstrahls 38 ist das Positionsmessgerät 36 eingerichtet, ein Prisma 40, das sich am Endeffektor 20 befindet, anzupeilen.

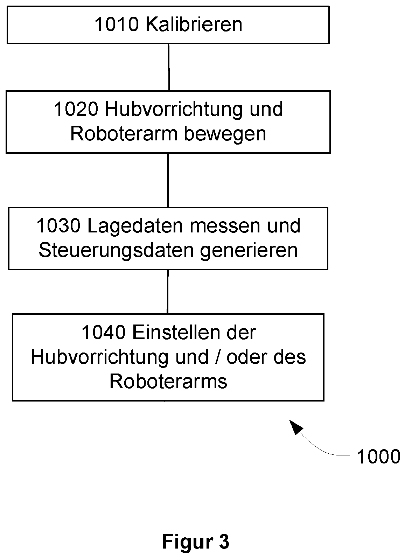

Die Basis 12 weist eine Steuerung 42 mit Programmcode 44 auf. Der Programmcode 44 ist eingerichtet, bei Ausführung auf der Steuerung 42 den Bauroboter 10 zu veranlassen, ein weiter unten im Zusammenhang mit Figur 3 beschriebenes Verfahren zur Steuerung des Bauroboters 10 auszuführen.

Denkbar ist, dass sich ein Teil der Steuerung 42 und / oder ein Teil des Programmcodes 44 außerhalb des Bauroboters 10, beispielsweise in einem Cloudbasierten Rechnersystem, befindet.

Die Basis 12 kann noch weitere Elemente beherbergen, beispielsweise einen Antrieb für das Fahrwerk 14, Ablagefächer und / oder Batteriemodule zur Energieversorgung.

Weiter weist der Bauroboter 10, insbesondere die Basis 12, einen Temperatursensor 46 auf.

Die Lagesensoren 24, 26 sowie der Temperatursensor 46 sind mit der Steuerung 42 datentechnisch verbunden, sodass die Steuerung 42 unter anderem Lagedaten sowie Temperaturdaten empfangen kann. Ebenso ist die Steuerung 42 datentechnisch mit der Hubvorrichtung 16 und dem Roboterarm 18 verbunden, sodass die Steuerung 42 unter anderem die Hubvorrichtung 16 und den Roboterarm 18 steuern kann.

Die Steuerung 42 ist zusammen mit dem Programmcode 44 auch eingerichtet, den Bauroboter 10, insbesondere die Hubvorrichtung 16 und den Roboterarm 18, anhand von mehreren anzufahrenden Referenzpositionen unter Kontrolle des Positionsmessgerätes 36 zu kalibrieren.

Figur 2 zeigt ein kinematisches Modell 110. Zur Verdeutlichung der Darstellung sind in Figur 2 Biegewinkel Alpha, Beta, Gamma in der Abbildung gemäß Figur 2 vergrößert dargestellt.

Das kinematische Modell 110 dient zur Modellierung einer effektiven Geometrie des Bauroboters 10, wie sie sich aus seiner Struktur und Störeffekten wie beispielsweise unerwünschtem Spiel, Elastizitäten, Verschleiß oder dergleichen ergeben.

Dazu sind im kinematische Modell 110 vier Modellelemente 112, 130, 134 sowie ein Modell-Roboterarm 118 vorgesehen. Diese Elemente modellieren jeweils das Fahrwerk 14 zusammen mit der Basis 12 und einem untersten Teil der Hubvorrichtung 16, das erste Linearelement 30, das zweite Linearelement 34 sowie den Roboterarm 18. Dabei modelliert der Modell-Roboterarm 118 den Roboterarm 18 inklusive der Werkzeugmaschine 22 und einem etwaigen, daran montierten Werkzeug.

Das kinematische Modell 110 umfasst ferner vier Modellfedern 114, 128 und 132, anhand derer die oben genannten Störeffekte im kinematische Modell 110 berücksichtigt werden können. Insbesondere können Belastungen, wie beispielsweise das Gewicht des Roboterarms 18 und das Gewicht der Werkzeugmaschine 20, zu einem Verbiegen der Hubvorrichtung 16 mitsamt des Roboterarms 18 führen. Im kinematischen Modell 110 wird dies durch Auslenkung der Modellelemente 112, 130, 134 an den Modellfedern 114, 128 und 132 modelliert, sodass die Biegewinkel Alpha, Beta, Gamma im kinematischen Modell 110 abgebildet und / oder angepasst werden können.

Der Biegewinkel Alpha und die Modellfeder 114 repräsentieren dabei Inklinationen gegenüber der Vertikalen, die durch das Fahrwerk 14 und / oder durch die Basis 12 entsprechend den vorangehend beschriebenen 1. und 2. Aspekten zustande kommen können.

Die Biegewinkel Beta und Gamma repräsentieren Neigungen aufgrund von Spiel, Elastizitäten und dergleichen der Linearelemente 30, 34 sowie der Gewindetrieben 28, 32.

Als weitere Modellparameter fließen in das kinematische Modell 110 Messfehler Delta 1 und Delta 2 ein, die geschätzten Messfehlern der Lagesensoren 24, 26 entsprechen. Derartige Messfehler können beispielsweise durch Drift der Lagesensoren 24, 26 zustande kommen.

Als Eingangsdaten des kinematischen Modells 110 dienen neben Stelldaten des Bauroboters 10 und seiner Elemente, insbesondere der Hubvorrichtung 16 und des Roboterarms 18, die Lagedaten der Lagesensoren 24, 26 sowie Temperaturdaten, in Figur 2 symbolisiert durch T, des Temperatursensors 46.

Figur 3 zeigt ein Verfahren 1000 zur Steuerung eines Bauroboters. Mithilfe des Verfahrens 1000 soll eine Position des Endeffektors 20 auf eine gewünschte Position, zum Beispiel eine Position, an der ein Bohrloch zu bohren ist, eingestellt werden.

Das Verfahren 1000 wird im Folgenden unter Verwendung der vorangehend eingeführten Bezugszeichen näher erläutert.

In einem ersten Schritt 1010 werden die Hubvorrichtung 16 und der Roboterarm 18 mithilfe des Positionsmessgerätes 36 kalibriert, sofern sich seit der letzten Ausführung einer Bauarbeit mit dem Bauroboter 10 die Position der Basis 12 verändert hat oder sofern bisher keine Kalibrierung stattgefunden hat.

Insbesondere wird eine Kalibrierung mithilfe des Positionsmessgerätes 36 durchgeführt, falls der Bauroboter 10 sich an einem neuen Ort und / oder in einer neuen Ausrichtung gegenüber einem Welt-Koordinatensystem oder dem Positionsmessgerät 36 befindet.

Zur Kalibrierung werden mehrere Referenzpositionen mit dem Endeffektor 20 angefahren und deren tatsächliche Positionen mithilfe des Positionsmessgerätes 36 ermittelt. Aus diesen Daten wird eine Position und eine Ausrichtung, insbesondere der Basis 12, in Bezug auf das Welt-Koordinatensystem oder das Positionsmessgerät 36 ermittelt. Die so ermittelte Position und Ausrichtung des Bauroboters 10 werden als Ausgangspunkt und Ausgangs-Ausrichtung für die weiteren Berechnungen mithilfe des kinematischen Modells 110 verwendet, um relativ zu diesem Ausgangspunkt und der Ausgangs-Ausrichtung die für die Ausführung der Bauarbeit gewünschte Position zu finden und dann mithilfe des kinematischen Modells 110 den Endeffektor 20 möglichst präzise an der gewünschten Position mit der erforderlichen Ausrichtung zu positionieren.

In einem zweiten Schritt 1020 wird der Endeffektor 20 zunächst auf Basis der Kalibrierung, der Hubvorrichtung 16 und dem Roboterarm 18 an die zu erreichende Position bewegt. Aufgrund von Ungenauigkeiten kann die hierdurch erreichte Position jedoch von der tatsächlich gewünschten, zu erreichenden Position abweichen.

Um diese Abweichungen zu kompensieren, werden in einem dritten Schritt 1030 Lagedaten der Hubvorrichtung 16 mithilfe des ersten Lagesensors 26 und dem zweiten Lagesensor 24 gemessen.

Die Lagedaten der Lagesensoren 24, 26 werden in dem kinematische Modell 110 berücksichtigt. Insbesondere wird das kinematische Modell 110 so angepasst, dass die gemessenen Lagedaten der Lagesensoren 24, 26 erwartet werden.

Bei der Auswertung der Lagedaten werden auch die zu erwartenden Messfehler Delta1 und Delta2 der Lagedaten der Lagesensoren 24, 26 mitberücksichtigt.

Mithilfe des kinematischen Modells 110 und den genannten Parametern und Daten sowie den Temperaturdaten T des Temperatursensors 46 werden Steuerungsdaten generiert, die die Hubvorrichtung 16 und den Roboterarm 18 steuern, um die Abweichungen der tatsächlich erreichten Position des Endeffektors 20 von der zu erreichenden Position zu kompensieren.

In einem abschließenden Schritt 1030 werden die Hubvorrichtung 16 und der Roboterarm 18 gemäß den generierten Steuerungsdaten gesteuert. Somit kann der Endeffektor 20 die Abweichungen kompensieren und die zu erreichende Position mit verbesserter Präzision erreichen. Es ergibt sich somit ein Korrekturschritt, der üblicherweise einer Distanz von weniger als 10cm, beispielsweise von 2 cm, entspricht.

Im Rahmen eigener Untersuchungen konnte bei einem Prototyp eines Bauroboters 10 durch Verwendung des Verfahrens 1000 die Positioniergenauigkeit in einer xy-Richtung um 62,7 % im Vergleich zu einem herkömmlichen Ansatz verbessert werden. Die 95 %-Fehlerschwelle konnte bei einzelnen Testsituationen von 9,48 mm auf 3,54 mm und damit deutlich unter die für Bauarbeiten gewünschte Positionsgenauigkeit von höchstens 5 mm gesenkt werden.

Bei einer Variante des Verfahrens 1000 kann vorgesehen sein, die Schritte 1020 bis 1040 in mehreren Durchgängen zu wiederholen. Dabei kann, anstatt von Anfang an zu versuchen, die zu erreichende Position zu erreichen, jeweils eine kurze Teildistanz zurückgelegt werden und die Abweichung zwischen der zurückzulegenden Teildistanz und der tatsächlich zurückgelegten Teildistanz wie vorangehend im Zusammenhang mit Schritt 1030 erläutert, kompensiert werden.

### Bezugszeichenliste

- 10: Bauroboter
- 12: Basis
- 14: Fahrwerk
- 16: Hubvorrichtung
- 18: Roboterarm
- 20: Endeffektor
- 22: Werkzeugmaschine
- 24: erster Lagesensor
- 26: zweiter Lagesensor
- 28: Gewindetrieb
- 30: Linearelement
- 32: Gewindetrieb
- 34: Linearelement
- 36: Positionsmessgerät
- 38: Laserstrahl
- 40: Prisma
- 42: Steuerung
- 44: Programmcode
- 46: Temperatursensor
- 110: kinematisches Modell
- 112: Modellelement
- 114: Modellfeder
- 116: Modellelement
- 118: Modell-Roboterarm
- 124: Modell-Lagesensor
- 126: Modell-Lagesensor
- 128: Modellfeder
- 130: Modellelement
- 132: Modellfeder
- 134: Modellelement
- g: Schwerkraftrichtung
- 1000: Verfahren
- 1010: Schritt
- 1020: Schritt
- 1030: Schritt
- Alpha: Biegewinkel
- Beta: Biegewinkel
- Gamma: Biegewinkel
- Delta1: Messfehler
- Delta2: Messfehler
- T: Temperatur

## Patentansprüche

1. **Bauroboter (10),** umfassend ein Fahrwerk (14), eine auf dem Fahrwerk (14) angeordnete Basis (12), eine an der Basis (12) angeordnete Hubvorrichtung (16), einen an der Hubvorrichtung (16) angeordneten, mit einem Endeffektor (20) versehenen, vorzugsweise mehrachsigen, Roboterarm (18), **dadurch gekennzeichnet, dass** der Bauroboter (10) einen ersten Lagesensor (24, 26) aufweist, der eingerichtet ist, Lagedaten der Hubvorrichtung (16) zu messen.

2. Bauroboter nach dem vorhergehenden Patentanspruch, **dadurch gekennzeichnet, dass** wenigstens ein zweiter Lagesensor (24, 26) am Bauroboter (10) an einer Position angeordnet ist, an der sich bei regulärem Betrieb die Orientierung des Lagesensors (24, 26) während einer Positionierung des Endeffektors (20) um höchstens 10° von einer Nulllage weg ändern kann.

3. Bauroboter nach einem der beiden vorhergehenden Patentansprüche, **dadurch gekennzeichnet, dass** der erste Lagesensor (24, 26) an der Hubvorrichtung (16), insbesondere an einem oberen Ende der Hubvorrichtung (16), angeordnet ist.

4. Bauroboter nach einem der vorhergehenden Patentansprüche, **dadurch gekennzeichnet, dass** der zweite Lagesensor (24, 26) an der Basis (12) und / oder am Fahrwerk (14) angeordnet ist.

5. Bauroboter nach einem der vorhergehenden Patentansprüche, **dadurch gekennzeichnet, dass** der Bauroboter (10) einen Temperatursensor (46) aufweist.

6. Bauroboter nach einem der vorhergehenden Patentansprüche, **dadurch gekennzeichnet, dass** das Fahrwerk (14) ein Kettenfahrwerk umfasst und / oder ist.

7. Bauroboter nach einem der vorhergehenden Patentansprüche, **dadurch gekennzeichnet, dass** die Hubvorrichtung (16) wenigstens zwei teleskopierbare Linearelemente (30, 34) aufweist.

8. Bauroboter nach einem der vorhergehenden Patentansprüche, **dadurch gekennzeichnet, dass** der Bauroboter (10) eingerichtet ist, sich anhand von mehreren anzufahrenden Referenzpositionen unter Kontrolle eines, insbesondere externen, Positionsmessgerätes (36), beispielsweise einer Totalstation, zu kalibrieren.

9. **Verfahren (1000)** zur Steuerung eines Bauroboters (10) nach einem der vorhergehenden Patentansprüche, um eine Position eines Endeffektors (20) einzustellen, umfassend:
a. Messen von Lagedaten einer Hubvorrichtung (16) des Bauroboters (10) anhand eines ersten Lagesensors (24, 26),
b. Berücksichtigen der Lagedaten in einem kinematisches Modell (110) und generieren von Steuerungsdaten für die Hubvorrichtung (16) und / oder für einen an der Hubvorrichtung (16) angeordneten Roboterarm (18) des Bauroboters (10) für eine Position eines am Roboterarm (18) angeordneten Endeffektors (20) anhand des kinematischen Modells (110),
c. Einstellen der Hubvorrichtung (16) und / oder des Roboterarms (18) gemäß den Steuerungsdaten.

10. Verfahren nach dem vorhergehenden Patentanspruch, **dadurch gekennzeichnet, dass** das kinematische Modell (110) wenigstens einen Biegewinkel (Alpha, Beta, Gamma) der Hubvorrichtung (16) berücksichtigt.

11. Verfahren nach einem der Patentansprüche 9 oder 10, **dadurch gekennzeichnet, dass** das kinematische Modell (110) einen Messfehler (Delta1, Delta2), insbesondere eine Drift, wenigstens eines Lagesensors (24, 26) berücksichtigt.

12. Verfahren nach einem der Patentansprüche 9 bis 11, **dadurch gekennzeichnet, dass** das kinematische Modell (110) eine Lage eines Fahrwerks (14) des Bauroboters (10) berücksichtigt.

13. Verfahren nach einem der Patentansprüche 9 bis 12, **dadurch gekennzeichnet, dass** die Basis (12), die Hubvorrichtung (16) und / oder der Roboterarm (18) mithilfe eines Positionsmessgerätes (36) kalibriert werden.
